# EUROPÄISCHE PATENTSCHRIFT

(11) **EP 2 100 135 B1**
(45) Veröffentlichungstag und Bekanntmachung des Hinweises auf die Patenterteilung: **14.07.2010**
(21) Anmeldenummer: 08785595.3
(22) Anmeldetag: 18.08.2008
(51) Int. Cl.: G01N 30/00

(54) **VORRICHTUNG ZUR FELDFLUSSFRAKTIONIERUNG**
DEVICE FOR FIELD FLOW FRACTIONATION
DISPOSITIF DE FRACTIONNEMENT DE FLUX DE CHAMP

(30) Priorität: 23.08.2007 DE 102007039798
(43) Veröffentlichungstag der Anmeldung: 16.09.2009
(73) Patentinhaber: Wyatt Technology Europe Gmbh, 56307 Dernbach (DE)
(72) Erfinder: KALTENBORN, Alge, 56564 Neuwied (DE); JOHANN, Christoph, 57614 Woldert (DE)
(74) Vertreter: Podszus, Burghart
(86) Internationale Anmeldenummer: PCT/EP2008/006756
(87) Internationale Veröffentlichungsnummer: WO 2009/024304

(56) Entgegenhaltungen:
- EP-A- 0 224 194
- WO-A-99/44726
- DE-A1- 2 612 005
- DE-A1- 19 949 462
- US-A1- 2005 011 821

## Beschreibung

Die Erfindung betrifft eine Vorrichtung zur Feldflußfraktionierung gemäß dem Gattungsbegriff des Anspruchs 1.

Eine derartige Vorrichtung ist aus der Druckschrift WO 99/44726 bekannt. Sie besteht unter anderem aus einem einen Trennkanal enthaltenden Kanalmodul, einer Halteeinrichtung zur Fixierung des Kanalmodules mittels Befestigungselementen und einer Laminarpumpe zur Erzeugung eines laminaren Lösungsmittelstromes, in dem die zu analysierenden Partikel gelöst sind. Dabei umfaßt das Kanalmodul ein Oberteil und ein Unterteil, wobei an dem Oberteil bodenseitig ein die seitlichen Abmessungen des Trennkanales definierender folienförmiger Abstandshalter angeordnet ist, an den sich eine auswechselbare Membran und eine auswechselbare Fritte anschließen.

Die Halteeinrichtung der bekannten Vorrichtung besieht im wesentlichen aus einem Gehäuse mit einem oberen Wandbereich, an dessen inneren Oberfläche sich das Oberteil des Kanalmodules abstützt, und einer axial von einer Aufnahmeposition, bei der das gesamte Kanalmodul aus der Halteeinrichtung entnehmbar oder in diese einführbar ist, in eine Halteposition, bei welcher das Unterteil gegen das Oberteil des Kanalmodules gedrückt wird, in dem Gehäuse verschiebbar angeordneten Druckplatte. Dabei wird die Druckplatte mittels der Befestigungselemente gegen das Unterteil des Kanalmodules gedrückt, derart, daß das Kanalmodul bei seiner bestimmungsgemäßen Verwendung innerhalb der Halteeinrichtung fixiert ist.

Bei den Befestigungsmitteln soll es sich im Falle der bekannten Vorrichtung vorzugsweise um mehrere unterhalb der Druckplatte in dem Gehäuse der Halteeinrichtung verteilt angeordnete Schrauben handeln. Allerdings wird auf Seite 10, Absatz 2, der vorstehend erwähnten Druckschrift erwähnt, daß es sich bei den Befestigungsmitteln auch um Federelemente, Hydraulikelemente, Pneumatikelemente, Knebelvorrichtungen oder Hebelvorrichtungen handeln kann, wobei die Druckschrift offenläßt, wie derartige Elemente oder Vorrichtungen aufgebaut und angeordnet sein könnten.

Als ein Nachteil bei der Verwendung der in der WO 99/44726 als bevorzugt angegebenen Schrauben hat sich allerdings ergeben, daß es für den Anwender der jeweiligen Vorrichtung sehr zeitaufwendig ist, die Membran des Kanalmodules zu wechseln. Denn hierzu müssen nach dem Wechseln der Membran alle Schrauben sehr gleichmäßig und fest angezogen werden, um die vorgegebene, relativ geringe Kanalhöhe (von beispielsweise 300 µm) genau einzuhalten. Sobald nämlich die Kanalhöhe etwa durch ungleichmäßiges Anziehen der Schrauben nur geringfügig geändert wird, ergeben sich andere Kanalvolumen und damit nicht reproduzierbare Meßergebnisse für die gleichen Proben.

Der Erfindung liegt die Aufgabe zugrunde, eine Vorrichtung der eingangs erwähnten Art anzugeben, bei welcher auf einfache Weise innerhalb relativ kurzer Zeit ein Austauschen der zwischen Ober- und Unterteil des Kanalmodules auswechselbar angeordneten Teile erfolgen kann, wobei eine wesentlich bessere Reproduzierbarkeit der Messungen mit dem Kanalmodul erreichbar sein soll, als dieses mit im Handel erhältlichen bekannten Vorrichtungen der Fall ist.

Diese Aufgabe wird erfindungsgemäß durch die Merkmale des Anspruchs 1 gelöst. Weitere, besonders vorteilhafte Ausgestaltungen der Erfindung offenbaren die abhängigen Ansprüche.

Bei der erfindungsgemäßen Vorrichtung wird die an dem Unterteil des Kanalmodules anliegende Druckplatte der Halteeinrichtung nicht mittels Schrauben gegen das Oberteil gepreßt, sondern mit Hilfe eines Linearantriebes, der eine Betätigungseinrichtung in Richtung der Längsachse der Vorrichtung verschiebt. Die Betätigungseinrichtung wirkt dabei über einen Schubkeil auf die Druckplatte, welche sich dann in vertikaler Richtung bewegt und das Kanalmodul schließt.

Wie sich in der Praxis gezeigt hat, ergibt sich mit einer derartigen Vorrichtung -beispielsweise nach einem Membranwechsel- eine hohe Reproduzierbarkeit des Kanalvolumens sowie ein gegenüber bekannten Vorrichtungen wesentlich einfacher durchführbarer Membranwechsel.

Bei einer Ausführungsform der Erfindung handelt es sich bei der Betätigungseinrichtung um eine Rolle, die in einem in Richtung der Längsachse der Vorrichtung verschiebbar angeordneten Lagerbock drehbar gelagert ist. Als Antrieb zur Verschiebung der Betätigungseinrichtung hat sich ein von einem Motor betätigbarer Spindelantrieb bewährt, wobei die Spindelmutter mit dem Lagerbock verbunden sein kann oder diese selbst bildet.

Als besonders vorteilhaft hat es sich erwiesen, wenn es sich bei dem Motor um einen drehmomentabhängigen elektrischen Stellmotor handelt. In einem derartigen Fall ist es auf einfache Weise möglich, das Unterteil entsprechend einem voreinstellbaren Drehmoment gegen das Oberteil zu drücken und durch eine Drehmomentüberwachung immer die gleiche Anpreßkraft und somit die vorgegebene Kanalhöhe einzuhalten.

Um sicher zu verhindern, daß bei der horizontalen Verschiebung der Betätigungseinrichtung ein Versatz oder eine Neigung des Unterteiles gegenüber dem Oberteil erfolgt, da die Betätigungseinrichtung während der Verschiebung an unterschiedlichen Onen gegen den Schubkeil drückt, hat es sich als besonders zweckmäßig erwiesen, wenn die Druckplatte über kugelgelagerte Linearführungen verschiebbar gelagert ist. Hierzu sind an der Druckplatte seitlich kugelgelagerte Führungswagen befestigt, welche durch entsprechende, an dem Gehäuse der Halteeinrichtung angeordnete Führungsschienen geführt werden.

Um einen besonders schnellen Wechsel der zwischen Ober- und Unterteil des Kanalmodules angeordneten auswechselbaren Teile vornehmen zu können, ist das Oberteil des Kanalmodules fest mit dem Gehäuse der Halteeinrichtung verbunden, so daß in der Aufnahmeposition der Druckplatte nur das Unterteil des Kanalmodules mit Fritte und Membran aus der Halteeinrichtung entnommen werden muß.

Weitere Einzelheiten und Vorteile der Erfindung ergeben sich aus dem folgenden, anhand von Figuren erläuterten Ausführungsbeispiel. Es zeigen:
Fig. 1 eine Seitenansicht einer erfindungsgemäßen Vorrichtung mit einem Kanalmodul und einer Halteeinrichtung, wobei die dem Betrachter zugewandte Gehäusewand der Halteeinrichtung weggelassen wurde (vgl. Schnittlinie I-I in Fig.2), und
Fig.2 eine stirnseitige Ansicht des Kanalmodules mit Haltevorrichtung aus der in Fig.1 mit II bezeichneten Richtung.

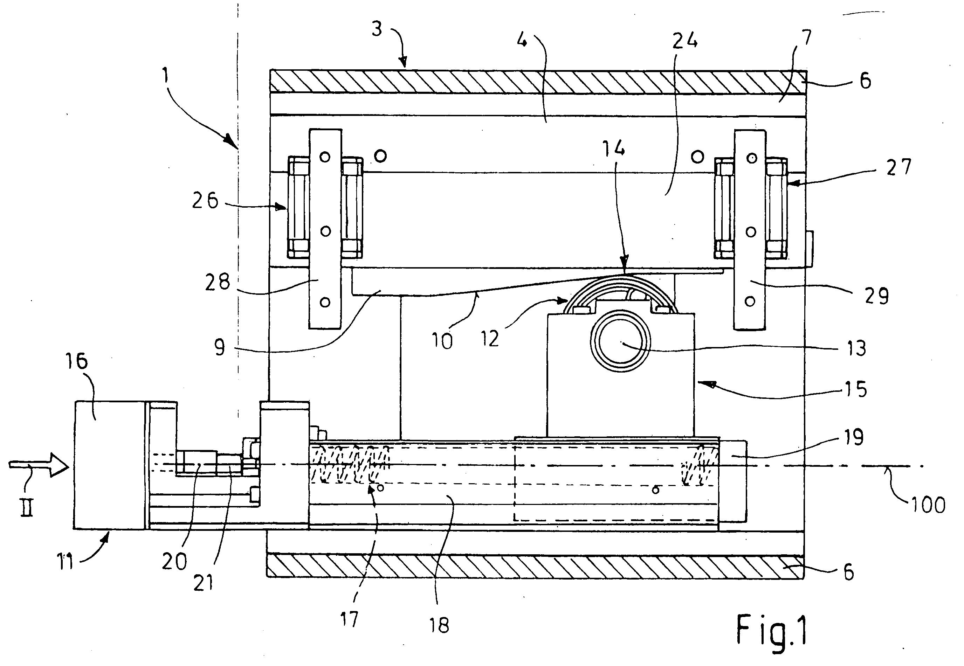

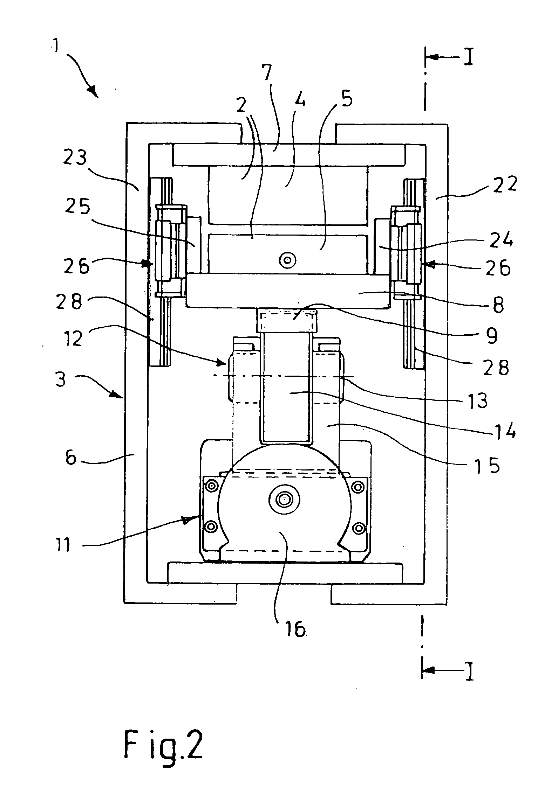

In Fig.1 und 2 ist mit 1 eine erfindungsgemäße Vorrichtung zur Assymmetrischen Fluß-Feldflußfraktionierung (AF⁴) bezeichnet. Im wesentlichen umfaßt die Vorrichtung 1 ein Kanalmodul 2 und eine Halteeinrichtung 3 zur Fixierung des Kanalmodules 2 .

Das in seiner geöffneten Position dargestellte Kanalmodul 2 umfaßt ein Oberteil 4 und ein Unterteil 5. An dem Oberteil 4 ist bei einem geschlossenen Kanalmodul 2 (nicht dargestellt) bodenseitig ein die seitlichen Abmessungen des Trennkanales definierender folienförmiger Abstandshalter angeordnet, an den sich eine auswechselbare Ultrafiltrationsmembran und eine auswechselbare Fritte anschließen, so daß ein Teil des Lösungsmittelflusses in eine untere, in dem Unterteil 5 angeordnete Kammer fließt und sich ein Querfluß ausbildet, der entlang des Trennkanales ein definiertes Kraftfeld senkrecht zur Transportrichtung des laminaren Lösungsmittelstromes erzeugt (zum Aufbau und zur Wirkungsweise derartiger, an sich bekannter Kanalmodule vergleiche beispielsweise die eingangs erwähnte WO 99/44726).

Die Halteeinrichtung 3 umfaßt ein Gehäuse, z.B. aus einer Aluminiumlegierung, mit einem oberen Wandbereich 7, an dem das mit dem Gehäuse 6 fest verbundene Oberteil 4 des Kanalmodules 2 anliegt.

In dem Gehäuse 6 der Halteeinrichtung 3 ist außerdem eine Druckplatte 8 vorgesehen, an deren Oberseite sich das Unterteil 5 des Kanalmodules 2 abstützt, und welche vertikal zur Längsachse 100 der Vorrichtung 1 von einer Aufnahmeposition, bei der mindestens das Unterteil 5 des Kanalmodules 2 sowie die auswechselbaren Teile aus der Halteeinrichtung 3 entnehmbar oder in diese einführbar sind, in eine Halteposition, bei welcher das Unterteil 5 gegen das Oberteil 4 des Kanalmodules 2 gedrückt wird, verschiebbar angeordnet ist.

Zur vertikalen Verschiebung der Druckplatte 8 ist auf der dem Unterteil 5 des Kanalmodules 2 abgewandten Seite der Druckplatte 8 ein sich in Richtung der Längsachse 100 der Vorrichtung 1 erstreckender Schubkeil 9 befestigt, wobei sich an der keilförmigen Fläche 10 des Schubkeiles 9 eine in Richtung der Längsachse 100 der Vorrichtung 1 mittels eines Antriebes 11 verschiebbare Betätigungseinrichtung 12 abstützt, derart, daß bei einer Verschiebung der Betätigungseinrichtung 12 eine vertikale Verschiebung der Druckplatte 8 erfolgt.

Die Betätigungseinrichtung 12 umfaßt bei dem in den Fig.1 und 2 dargestellten Ausführungsbeispiel im wesentlichen eine auf einer Lagerwelle 13 angeordnete Rolle 14 (beispielsweise den Außenring eines Nadellagers), die in einem in Richtung der Längsachse 100 der Vorrichtung 1 verschiebbar angeordneten Lagerbock 15 drehbar gelagert ist.

Bei dem Antrieb 11 handelt es sich um einen von einem drehmomentabhängigen elektrischen Stellmotor 16 betätigbaren Spindelantrieb. Dieser umfaßt eine in dem Gehäuse 6 der Halteeinrichtung 3 drehbar gelagerte Spindel 17 und eine mit dem Lagerbock 15 verbundene Spindelmutter 19, welche entlang einer in Richtung der Längsachse 100 der Vorrichtung 1 angeordneten Führung 18 verschiebbar gelagert ist.

Der elektrische Stellmotor 16 ist außerhalb des Gehäuses 6 der Halteeinrichtung 3 angeordnet und wirkt über eine Kupplung 20 auf ein seitlich aus dem Gehäuse 6 herausgeführtes Spindelende 21.

Die Druckplatte 8 weist einen U-förmigen Querschnitt auf, wobei auf ihren den Seitenwänden 22, 23 des Gehäuses 6 zugewandten Seiten der Schenkel 24, 25 jeweils zwei von einander beabstandete kugelgelagerte Führungswagen 26, 27 angeordnet sind, welche mittels an den Seitenwänden des Gehäuses befestigter Führungsschienen 28, 29 in vertikaler Richtung geführt werden. Durch die Verwendung derartiger leichtgängiger Linearführungen wird verhindert, daß aufgrund der horizontalen Verschiebung der Betätigungseinrichtung bei der vertikalen Bewegung des Unterteiles 5 dieses sich gegenüber dem Oberteil 4 verkantet.

Soll z.B. nach dem Wechsel einer Ultrafiltrationsmembran das Kanalmodul 2 für weitere Messungen wieder geschlossen werden, so wird zunächst in das Gehäuse 6 auf die Druckplatte 8 das Unterteil 5 mit der Fritte und der ausgewechselten Membran gesetzt (diese Position des Unterteiles ist in Fig.1 und 2 dargestellt).

Anschließend wird dann der drehmomentabhängig steuerbare elektrische Stellmotor 16 angeschaltet, so daß sich die Spindel 17 dreht und über die sich verschiebende Spindelmutter 19 den Lagerbock 15 von der in Fig.1 dargestellten Stellung nach links verschiebt.

Über die Rolle 14 und den an der Druckplatte 8 befestigten Schubkeil 9 wird das Unterteil 5 nach oben verschoben und entsprechend einem voreingestellten Drehmoment gegen das fest mit dem Gehäuse 6 verbundene Oberteil 4 gedrückt. Durch die Drehmomentüberwachung des Stellmotors 16 wird dabei immer die gleiche Anpreßkraft und somit die entsprechende gewünschte Kanalhöhe des Kanalmodules 2 erreicht.

Die Erfindung ist selbstverständlich nicht auf das vorstehend beschriebene Ausführungsbeispiel beschränkt. So kann die Betätigungseinrichtung statt einer Rolle auch ein in entsprechenden Führungen gleitendes Schiebelement umfassen. Ferner kann statt eines Spindelantriebes beispielsweise auch ein Zahnstangenantrieb oder ein hydraulischer Hubantrieb verwendet werden, die den Lagerbock in Richtung der Längsachse der Vorrichtung verschieben.

### Bezugszeichenliste

- 1: Vorrichtung
- 2: Kanalmodul
- 3: Halteeinrichtung
- 4: Oberteil
- 5: Unterteil
- 6: Gehäuse
- 7: obere Wandbereich
- 8: Befestigungselement, Druckplatte
- 9: Schubkeil
- 10: keilförmige Fläche
- 11: Antrieb
- 12: Betätigungseinrichtung
- 13: Lagerwelle
- 14: Rolle
- 15: Lagerbock
- 16: Motor, Stellmotor
- 17: Spindel
- 18: Führung
- 19: Spindelmutter
- 20: Kupplung
- 21: Spindelende
- 22,23: Seitenwände
- 24,25: Schenkel
- 26,27: Führungswagen
- 28,29: Führungsschienen

- 100: Längsachse

## Patentansprüche

1. Vorrichtung zur Feldflußfraktionierung mit einem einen Trennkanal enthaltenden Kanalmodul (2), einer Halteeinrichtung (3) zur Fixierung des Kanalmodules (2) mittels Befestigungselementen (8), wobei das Kanalmodul (2) ein Oberteil (4) und ein Unterteil (5) umfaßt und wobei zwischen dem Oberteil (4) und dem Unterteil (5) ein die seitlichen Abmessungen des Trennkanales definierender Abstandshalter angeordnet ist, an den sich eine auswechselbare Membran und eine Fritte anschließen, mit den Merkmalen:
a) die Halteeinrichtung (3) besteht aus einem Gehäuse (6) mit einem oberen Wandbereich (7), an dessen innerer Oberfläche sich das Oberteil (4) des Kanalmodules (2) abstützt;
b) in dem Gehäuse (6) der Halteeinrichtung (3) ist eine Druckplatte (8) vorgesehen, an deren Oberseite sich das Unterteil (5) des Kanalmodules (2) abstützt und welche senkrecht zur Längsachse (100) der Vorrichtung (1) von einer Aufnahmeposition, bei der mindestens das Unterteil (5) des Kanalmodules (2) sowie die auswechselbaren Teile aus der Halteeinrichtung (3) entnehmbar oder in diese einführbar sind, in eine Halteposition, bei welcher das Unterteil (5) gegen das Oberteil (4) des Kanalmodules (2) gedrückt wird, verschiebbar angeordnet ist;
c) mit der dem Unterteil (5) des Kanalmodules (2) abgewandten Seite der Druckplatte (8) ist ein sich in Richtung der Längsachse (100) der Vorrichtung (1) erstreckender Schubkeil (9) fest verbunden;
d) an der keilförmigen Fläche (10) des Schubkeiles (9) stützt sich eine in Richtung der Längsachse (100) der Vorrichtung (1) mittels eines Antriebes (11) verschiebbare Betätigungseinrichtung (12) ab, derart, daß bei einer axialen Verschiebung der Betätigungseinrichtung (12) eine vertikale Verschiebung der Druckplatte (8) erfolgt.

2. Vorrichtung nach Anspruch 1, **dadurch gekennzeichnet, daß** die Betätigungseinrichtung (12) eine Rolle (14) umfaßt, die in einem in Richtung der Längsachse (100) der Vorrichtung (1) verschiebbar angeordneten Lagerbock (15) drehbar gelagert ist.

3. Vorrichtung nach Anspruch 1 oder 2, **dadurch gekennzeichnet, daß** es sich bei dem Antrieb (11) um einen von einem Motor (16) betätigbaren Spindelantrieb mit einer in dem Gehäuse (6) der Halteeinrichtung (3) drehbar gelagerten Spindel (17) und einer entlang einer in Richtung der Längsachse (100) der Vorrichtung (1) angeordneten Führung (18) verschiebbar gelagerten Spindelmutter (19) handelt, an der die Betätigungseinrichtung (12) befestigt ist.

4. Vorrichtung nach Anspruch 2 und 3, **dadurch gekennzeichnet, daß** der Lagerbock (15) und die Spindelmutter (19) einteilig ausgebildet sind.

5. Vorrichtung nach Anspruch 3, **dadurch gekennzeichnet, daß** der Motor (16) außerhalb des Gehäuses (6) der Halteeinrichtung (3) angeordnet ist und über eine Kupplung (20) auf ein seitlich aus dem Gehäuse (6) herausgeführtes Spindelende (21) wirkt.

6. Vorrichtung nach einem der Ansprüche 3 bis 5, **dadurch gekennzeichnet, daß** es sich bei dem Motor (16) um einen drehmomentabhängigen elektrischen Stellmotor handelt.

7. Vorrichtung nach einem der Ansprüche 1 bis 6, **dadurch gekennzeichnet, daß** die Druckplatte (8) auf ihren den Seitenwänden (22, 23) des Gehäuses (6) zugewandten Seiten mittels kugelgelagerter Linearführungen verschiebbar gelagert ist.

8. Vorrichtung nach Anspruch 7, **dadurch gekennzeichnet, daß** die Linearführungen jeweils aus einem an der Druckplatte (8) befestigten Führungswagen (26, 27) und einer an der Seitenwand (22, 23) des Gehäuses (6) sich in vertikaler Richtung erstreckenden Führungsschiene (28, 29) bestehen.

9. Vorrichtung nach Anspruch 7 oder 8, **dadurch gekennzeichnet, daß** die Druckplatte (8) einen U-förmigen Querschnitt aufweist, wobei die Führungswagen (26, 27) außenseitig an den beiden Schenkeln (24, 25) der Druckplatte (8) befestigt sind.

10. Vorrichtung nach einem der Ansprüche 1 bis 9, **dadurch gekennzeichnet, daß** das Oberteil (4) des Kanalmodules (2) fest mit dem Gehäuse (6) der Halteeinrichtung (3) verbunden ist, so daß in der Aufnahmeposition der Druckplatte (8) lediglich das Unterteil (5) des Kanalmodules (2) mit der Fritte und der Membran aus der Halteeinrichtung (3) entnehmbar sind.

## Claims

1. Apparatus for field flow fractionation, with a duct module (2) containing a separating duct, with a holding device (3) for fixing the duct module (2) by means of fastening elements (8), the duct module (2) comprising an upper part (4) and a lower part (5), and there being arranged between the upper part (4) and the lower part (5) a spacer which defines the lateral dimensions of the separating duct and which is followed by an exchangeable membrane and a frit, with the features:
a) the holding device (3) consists of a housing (6) with an upper wall region (7), on the inner surface of which the upper part (4) of the duct module (2) is supported;
b) in the housing (6) of the holding device (3), a pressure plate (8) is provided, on the top side of which the lower part (5) of the duct module (2) is supported and which is arranged so as to be displaceable perpendicularly with respect to the longitudinal axis (100) of the apparatus (1) from a reception position, in which at least the lower part (5) of the duct module (2) and the exchangeable parts can be removed from the holding device (3) or can be introduced into this, into a holding position, in which the lower part (5) is pressed against the upper part (4) of the duct module (2);
c) a push wedge (9) extending in the direction of the longitudinal axis (100) of the apparatus (1) is connected fixedly to that side of the pressure plate (8) which faces away from the lower part (5) of the duct module (2);
d) an actuating device (12) displaceable in the direction of the longitudinal axis (100) of the apparatus (1) by means of a drive (11) is supported on the wedge-shaped surface (10) of the push wedge (9) in such a way that, in the event of an axial displacement of the actuating device (12), a vertical displacement of the pressure plate (8) takes place.

2. Apparatus according to Claim 1, **characterized in that** the actuating device (12) comprises a roller (14) which is mounted rotatably in a bearing block (15) arranged displaceably in the direction of the longitudinal axis (100) of the apparatus (1).

3. Apparatus according to Claim 1 or 2, **characterized in that** the drive (11) is a spindle drive actuable by a motor (16), with a spindle (17) mounted rotatably in the housing (6) of the holding device (3) and with a spindle nut (19) which is mounted displaceably along a guide (18) arranged in the direction of the longitudinal axis (100) of the apparatus (1) and to which the actuating device (12) is fastened.

4. Apparatus according to Claims 2 and 3, **characterized in that** the bearing block (15) and the spindle nut (19) are produced in one piece.

5. Apparatus according to Claim 3, **characterized in that** the motor (16) is arranged outside the housing (6) of the holding device (3) and acts via a coupling (20) upon a spindle end (21) guided laterally out of the housing (6).

6. Apparatus according to one of Claims 3 to 5, **characterized in that** the motor (16) is a torque-dependent electric servomotor.

7. Apparatus according to one of Claims 1 to 6, **characterized in that** the pressure plate (8) is mounted displaceably, on its sides facing the side walls (22, 23) of the housing (6), by means of ball-mounted linear guides.

8. Apparatus according to Claim 7, **characterized in that** the linear guides in each case consist of a guide carriage (26, 27) fastened to the pressure plate (8) and of a guide rail (28, 29) extending in the vertical direction on the side wall (22, 23) of the housing (6).

9. Apparatus according to Claim 7 or 8, **characterized in that** the pressure plate (8) has a U-shaped cross section, the guide carriage (26, 27) being fastened on the outside to the two legs (24, 25) of the pressure plate (8).

10. Apparatus according to one of Claims 1 to 9, **characterized in that** the upper part (4) of the duct module (2) is connected fixedly to the housing (6) of the holding device (3), so that, in the reception position of the pressure plate (8), only the lower part (5) of the duct module (2) with the frit and with the membrane can be removed from the holding device (3).

## Revendications

1. Dispositif pour le fractionnement de flux de champ comprenant un module de canal (2) contenant un canal de séparation, un dispositif de retenue (3) pour la fixation du module de canal (2) au moyen d'éléments de fixation (8), le module de canal (2) comprenant une partie supérieure (4) et une partie inférieure (5), et un élément d'espacement définissant les dimensions latérales du canal de séparation étant disposé entre la partie supérieure (4) et la partie inférieure (5), une membrane remplaçable et une fritte se raccordant à l'élément d'espacement, comprenant les caractéristiques suivantes :
a) le dispositif de retenue (3) se compose d'un boîtier (6) avec une région de paroi supérieure (7), sur la surface interne de laquelle s'appuie la partie supérieure (4) du module de canal (2) ;
b) dans le boîtier (6) du dispositif de retenue (3) est prévue une plaque de pression (8), sur le côté supérieur de laquelle s'appuie la partie inférieure (5) du module de canal (2), et qui est disposée de manière déplaçable perpendiculairement à l'axe longitudinal (100) du dispositif (1) d'une position de réception dans laquelle au moins la partie inférieure (5) du module de canal (2) ainsi que les parties remplaçables peuvent être enlevées du dispositif de retenue (3) ou introduites dans celui-ci, dans une position de retenue dans laquelle la partie inférieure (5) est pressée contre la partie supérieure (4) du module de canal (2) ;
c) une cale de poussée (9) s'étendant dans la direction de l'axe longitudinal (100) du dispositif (1) est connectée fixement au côté de la plaque de pression (8) opposé à la partie inférieure (5) du module de canal (2) ;
d) sur la surface en forme de cale (10) de la cale de poussée (9) s'appuie un dispositif d'actionnement (12) déplaçable dans la direction de l'axe longitudinal (100) du dispositif (1) au moyen d'un entraînement (11), de telle sorte que dans le cas d'un déplacement axial du dispositif d'actionnement (12), il se produise un déplacement vertical de la plaque de pression (8).

2. Dispositif selon la revendication 1, **caractérisé en ce que** le dispositif d'actionnement (12) comprend un rouleau (14) qui est monté à rotation dans un coussinet (15) disposé de manière déplaçable dans la direction de l'axe longitudinal (100) du dispositif (1).

3. Dispositif selon la revendication 1 ou 2, **caractérisé en ce que** l'entraînement (11) est un entraînement à broche pouvant être actionné par un moteur (16), avec une broche (17) montée à rotation dans le boîtier (6) du dispositif de retenue (3) et un écrou de broche (19) monté de manière déplaçable le long d'un guide (18) disposé dans la direction de l'axe longitudinal (100) du dispositif (1), sur lequel est fixé le dispositif d'actionnement (12).

4. Dispositif selon les revendications 2 et 3, **caractérisé en ce que** le coussinet (15) et l'écrou de broche (19) sont réalisés d'une seule pièce.

5. Dispositif selon la revendication 3, **caractérisé en ce que** le moteur (16) est disposé en dehors du boîtier (6) du dispositif de retenue (3) et agit par le biais d'un accouplement (20) sur une extrémité de broche (21) guidée latéralement hors du boîtier (6).

6. Dispositif selon l'une quelconque des revendications 3 à 5, **caractérisé en ce que** le moteur (16) est un moteur de commande électrique dépendant du couple.

7. Dispositif selon l'une quelconque des revendications 1 à 6, **caractérisé en ce que** la plaque de pression (8) est montée sur ses côtés tournés vers les parois latérales (22, 23) du boîtier (6) de manière déplaçable au moyen de guides linéaires à roulements à billes.

8. Dispositif selon la revendication 7, **caractérisé en ce que** les guides linéaires se composent à chaque fois d'un chariot de guidage (26, 27) fixé à la plaque de pression (8) et d'un rail de guidage (28, 29) s'étendant dans la direction verticale sur la paroi latérale (22, 23) du boîtier (6).

9. Dispositif selon la revendication 7 ou 8, **caractérisé en ce que** la plaque de pression (8) présente une section transversale en forme de U, les chariots de guidage (26, 27) étant fixés du côté extérieur aux deux branches (24, 25) de la plaque de pression (8).

10. Dispositif selon l'une quelconque des revendications 1 à 9, **caractérisé en ce que** la partie supérieure (4) du module de canal (2) est connectée fixement au boîtier (6) du dispositif de retenue (3), de sorte que dans la position de réception de la plaque de pression (8), seulement la partie inférieure (5) du module de canal (2) avec la fritte et la membrane pouvant être retirées du dispositif de retenue (3).
